# EUROPÄISCHE PATENTSCHRIFT

(11) **EP 0 866 938 B1**
(45) Veröffentlichungstag und Bekanntmachung des Hinweises auf die Patenterteilung: **09.04.2003**
(21) Anmeldenummer: 97921720.5
(22) Anmeldetag: 23.04.1997
(51) Int. Cl.: F24D 5/08, F24D 3/16

(54) **DECKENRADIATOR**
CEILING RADIATOR
RADIATEUR DE PLAFOND

(30) Priorität: 24.04.1996 DE 19617718
(43) Veröffentlichungstag der Anmeldung: 30.09.1998
(73) Patentinhaber: Klix, Uwe, 78628 Rottweil (DE)
(72) Erfinder: Klix, Uwe, 78628 Rottweil (DE)
(74) Vertreter: Weiss, Peter, Dr. rer.nat.
(86) Internationale Anmeldenummer: EP9702069
(87) Internationale Veröffentlichungsnummer: WO97040321

(56) Entgegenhaltungen:
- WO-A-91/13294
- FR-A- 1 553 142
- FR-A- 2 615 932
- GB-A- 2 262 548

## Beschreibung

Die Erfindung betrifft einen Deckenradiator für die Beheizung bzw. Kühlung von Räumen aller Art aus zumindest einem Durchflussrohr für ein Heiz- oder Kühlmedium und einem Halter,
- wobei das Durchflussrohr mittels des Halters unterhalb einer Raumdecke aufhängbar ist,
- wobei von dem Durchflussrohr zumindest drei bogenartige oder flache Strahlplatten strahlenförmig abstehen,
- wobei die Strahlplatten profilierte oder glatte Oberflächen aufweisen,
- wobei die Strahlplatten mit Befestigungsleisten oder Befestigungsprofilen für den Halter versehen sind,
- und wobei zumindest eine der drei Strahlplatten mittels einer der Befestigungsleisten oder eines der Befestigungsprofile an dem Halter befestigt ist.

Die üblichen Deckenstrahlbandheizungen bestehen aus einem breiten, gesickten Strahlplattenband aus Stahlblech, in das ein wasserdurchströmtes Rohrregister eingeschweisst ist. Oft wird zur Begrenzung der Wärmeabgabe nach oben eine Wärmedämmung aufgelegt.

Die üblichen direkt beheizten Strahlungsrohre bestehen aus einem zum Fussboden strahlenden Reflektor, der von einem darunter angeordneten Heizrohr angestrahlt wird, durch welches heisse Abgase von einem Öl- oder Gas-Gebläsebrenner strömen, und einem Saugventilator.

Beide Ausführungen haben den Nachteil, dass die angestrahlte Fussbodenfläche im Verhältnis zur heissen Strahlfläche der Deckenradiatoren sehr klein ist, was sich bei höheren Heiztemperaturen sehr nachteilig auf die Behaglichkeit auswirkt. Zudem ist die Herstellungsart aus vielen zusammengeschweissten Bauteilen, wie gesickten Blechplatten mit seitlichen Abkantungen, Durchflussrohren und Rohrverteilern, Verstärkungsprofilen mit Befestigungslöchern und Stirnblechen, sehr aufwendig.

Beispielsweise ist aus der GB 2 262 548 A ein Deckenradiator der oben genannten Art bekannt, bei welchem ein von dem Heiz- oder Kühlmedium durchströmtes Durchflussrohr nach unten von einer Abstrahlfläche abgeschattet ist. Auch die seitlichen Flächen sind abgeschattet.

Aus der FR - A - 1 553 142 ist ein Wandradiator bekannt, welcher vertikal in eine Ausnehmung einer Wand eingebaut ist. Auch er besitzt nur eine Abstrahlfläche nach aussen, sämtliche anderen Flächen sind abgeschattet.

Gemäss der WO 91 13294 ist ein Durchflussrohr ebenfalls in Bauelemente eingebaut, die unterschiedlichste Konfigurationen zum Abstrahlen aufweist.

Der vorliegenden Erfindung liegt die Aufgabe zugrunde, auf Grund der heute üblichen guten Gebäude-Wärmedämmung neuartige und der Zeit angepasste Deckenradiatoren mit wesentlich kleineren Baumassen und einem geringeren Eigengewicht und einer wesentlich besseren Wärmeverteilung mit geringeren Zugerscheinungen zu schaffen.

Zur Lösung dieser Aufgabe führt, dass die zumindest drei Strahlplatten radial abstehen.

Der neuartige Warmwasser-Deckenradiator ist vorwiegend als X-förmiges Strangpress-Profil aus Aluminium hergestellt. Durch die diagonale Anordnung von acht gewölbten Strahlflächen an einem zentralen Heizrohr sind wesentlich kleinere Bauarten mit grosser Durchbiegefestigkeit und einem geringen Gewicht möglich. Zusätzlich kann ein U-förmiges Luftkanalprofil aufgeschoben werden.

In einem Ausführungsbeispiel sind direkt beheizte Strahlrohre für heisse Abgase in den Deckenradiator eingesetzt.

In einem weiteren Ausführungsbeispiel sind ohne Reflektor fünf oder sechs Strahlplatten mit zehn oder zwölf strahlschattenfreien Strahlflächen vorteilhaft, weil die lästigen Oberflächentemperaturen stark reduziert werden.

In den beiliegenden Zeichnungsfiguren sind mehrere Ausführungs- und Anwendungsbeispiele dargestellt; es zeigt
Figur 1 eine Einsicht in einen Raum mit zwei Deckenradiatoren;
Figur 2 eine vergrössert dargestellte Frontansicht eines weiteren Ausführungsbeispiels eines Deckenradiators;
Figur 3 eine Seitenansicht eines erfindungsgemässen Deckenradiators;
Figur 4 einen Querschnitt durch einen Deckenradiator an einer Halterung;
Figur 5 einen Querschnitt durch ein weiteres Ausführungsbeispiel eines Deckenradiators an einem Halter;
Figur 6 einen Querschnitt durch ein weiteres, jedoch nicht zur Erfindung gehörendes Ausführungsbeispiel eines Deckenradiators;
Figur 7 einen Querschnitt durch ein weiteres Ausführungsbeispiel eines Deckenradiators;
Figuren 8 und 9 weitere Ausführungsbeispiels von Deckenradiatoren an Haltern;
Figur 10 einen Querschnitt durch ein weiteres Ausführungsbeispiel eines Deckenradiators mit eingesetztem Tauchrohr von einem Brenner;
Figur 11 einen Querschnitt durch ein weiteres Ausführungsbeispiel eines Deckenradiators an einem U-Profil, welches an einem Halter befestigt ist.

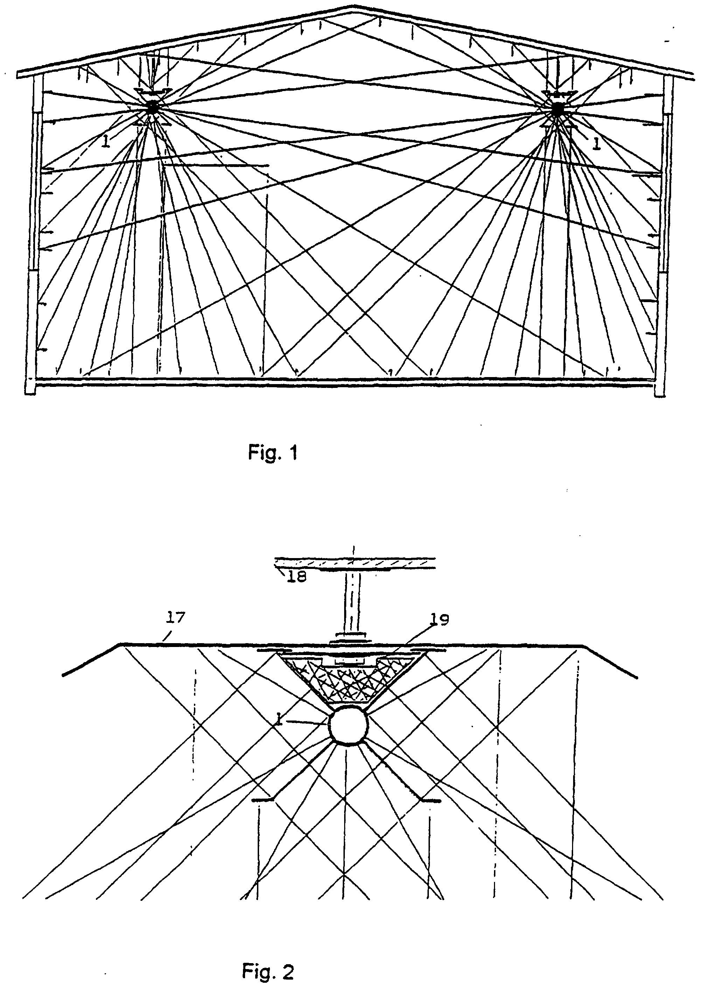

Gemäss Figur 1 sind in einem Raum unterhalb einer Raumdecke zwei abgehängte Deckenradiatoren 1 vorgesehen, die X-förmig ausgestaltet sind und Wärme oder Kälte abstrahlen.

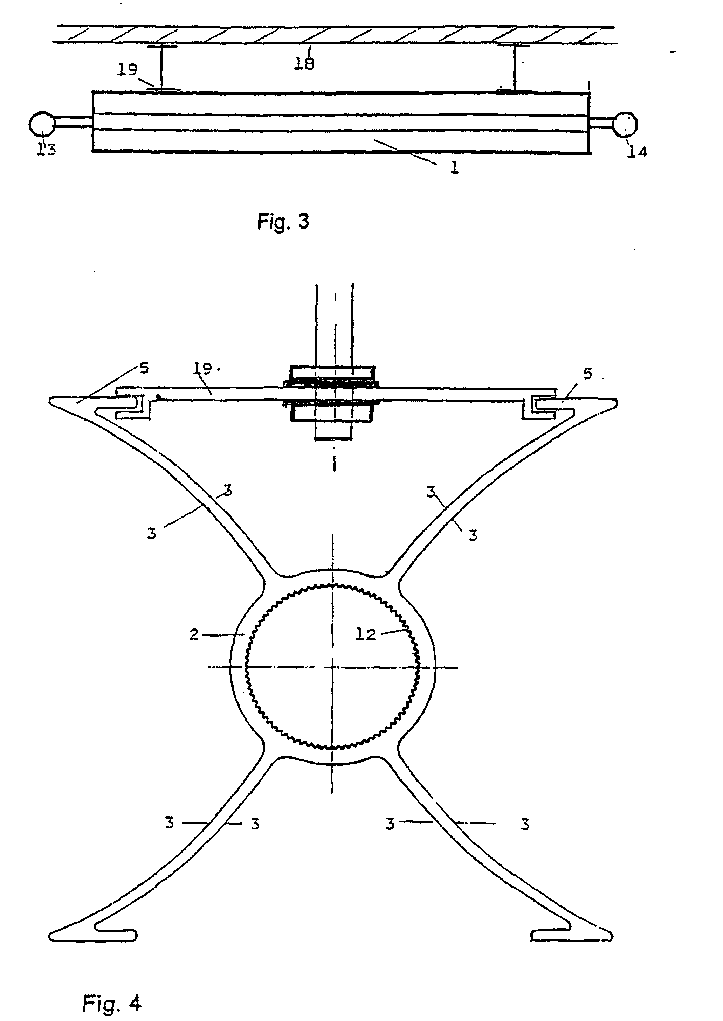

Gemäss Figur 2 ist ein X-förmiger Deckenradiator an einem Halter 19 befestigt und über diesen Halter 19 mit der Raumdecke 18 verbunden. Zwischen zwei Strahlplatten ist eine Wärmedämmung eingelegt. Ferner ist der Deckenradiator von einem Reflektor 17 überdeckt.

Gemäss Figur 3 ist erkennbar, dass an den Deckenradiator 1 ein Heizungs-Vorlauf 13 und ein Heizungs-Rücklauf 14 anschliesst.

In Figur 4 ist ein stranggepresster X-förmiger Deckenradiator in Originalgrösse dargestellt mit einem Heizrohr 2 3,2 cm (1 1/4") und vier Strahlplatten 3, die gewölbt ausgebildet sind. Auf diese Weise sind acht gewölbte Strahlflächen gebildet. Endwärtig weist jede Strahlplatte eine Stapel- und Befestigungsleiste 5 auf. Die Befestigungsleisten 5 von zwei benachbarten Strahlplatten 3 sind in jeweils eine Nut eines Halteprofils 19 eingeschoben.

Die Innenfläche des Heizrohres 2 (Durchflussrohr) ist mit einer Riffelung 12 versehen.

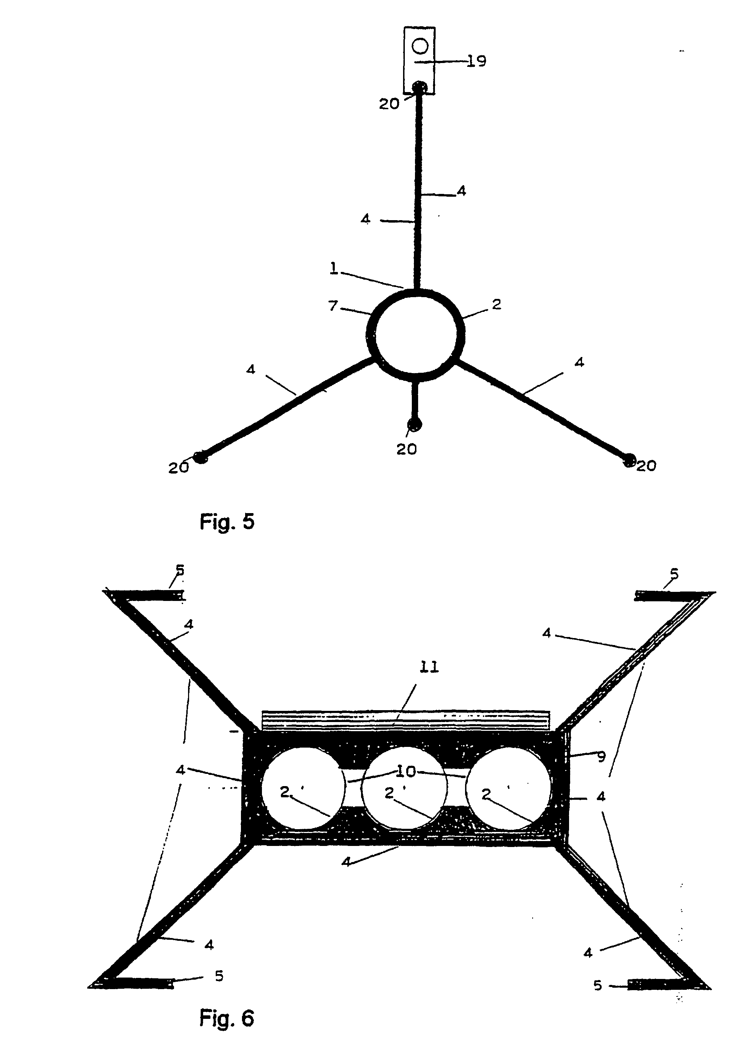

Bei dem Ausführungsbeispiel eines Deckenradiators 1 gemäss Figur 5 sind die Strahlplatten flach ausgebildet. Endwärtig bestzen diese Strahlplatten jeweils ein Befestigungsprofil 20 zum Festlegen an einem Halter 19.

Gemäss Figur 6 besteht das Durchflussrohr aus mehreren Rohren 2', die zusammen ein Rohrregister 9 ausbilden. Die Rohre 2' sind durch Querbohrungen 10 miteinander verbunden.

Auf das Rohrregister 9 ist zusätzlich eine elektrische Bandheizung 11 aufgelegt. In diesem Ausführungsbeispiel steten die Strahlplattten nicht radial von dem Durch flusstehten ab, so daß dieses Ausführungsbeispiel nicht unter den Schutzbereich der Ansprüche fällt.

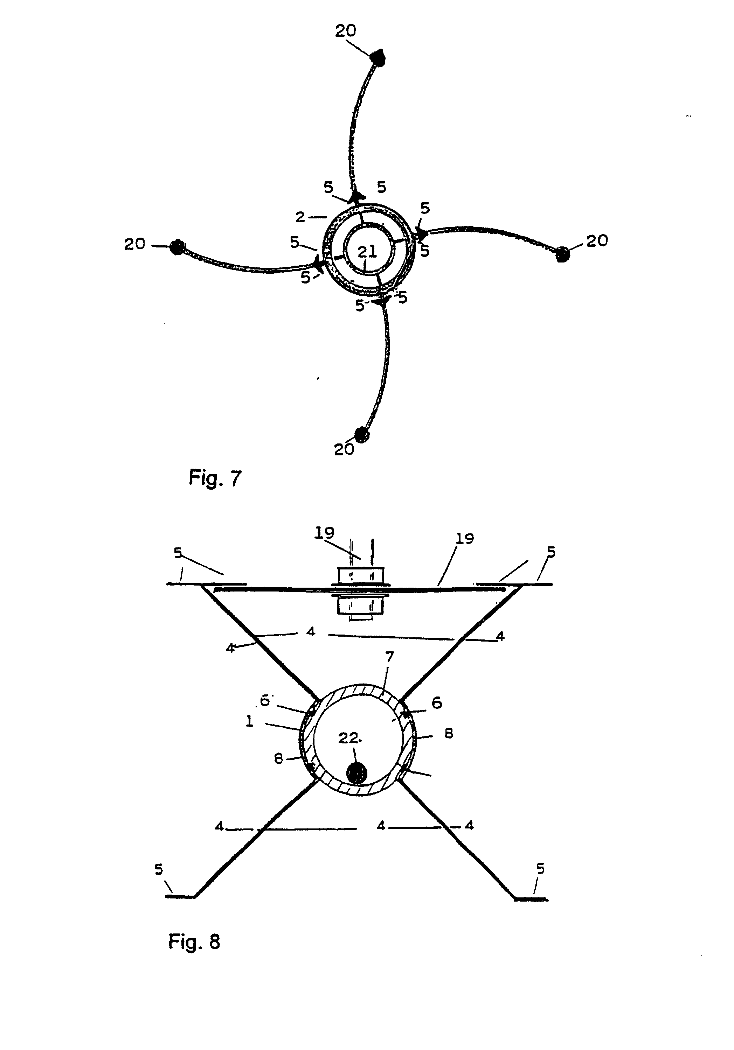

Gemäss Figur 7 ist erkennbar, dass die Strahlplatten auch in der gleichen Richtung gekrümmt sein können. Ferner ist in das Durchflussrohr 2 ein Tauchrohr 21 eingesetzt.

Gemäss Figur 8 befindet sich in dem Durchflussrohr ein Turbulator 22. Dieser kann aus Profilstäben oder Spiralen bestehen.

Ferner ist bei diesem Ausführungsbeispiel erkennbar, dass Durchflussrohr 2 und Strahlplatten 3 nicht einstückig hergestellt zu sein brauchen. Hier sind zwei gesickte bzw. abgewinkelte Stahlplattenpaare 8 über entsprechende Schweissungen 6 mit dem Metallrohr 7 des Durchflussrohres 2 verbunden.

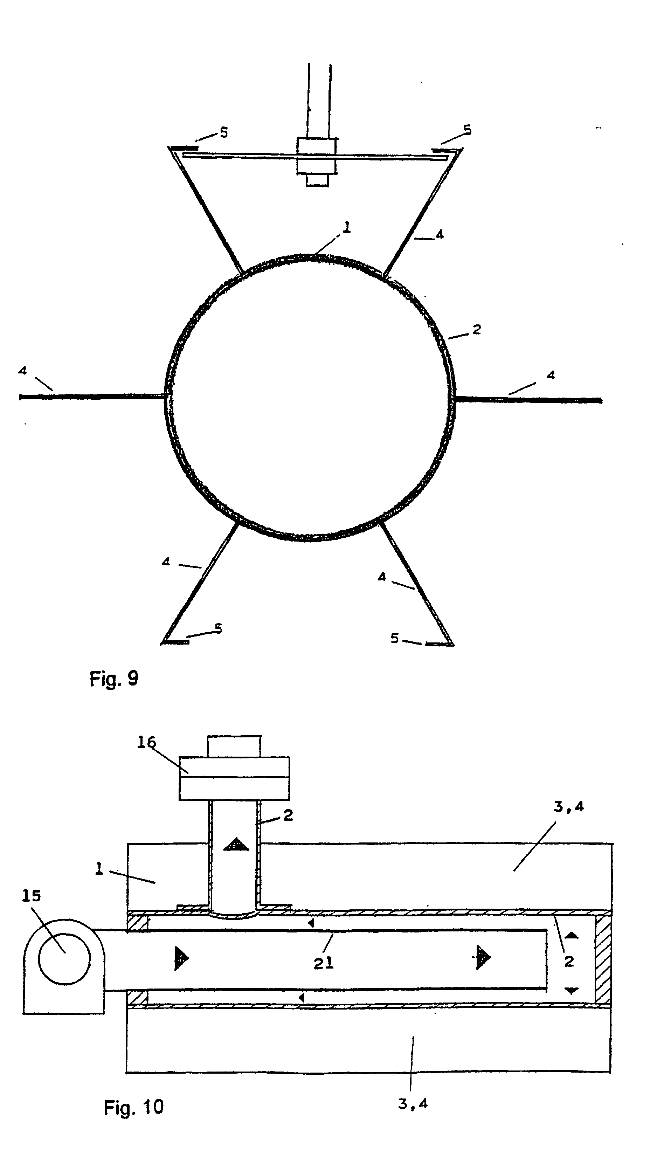

Der Deckenradiator 1 gemäss Figur 9 weist ein grosses Heizrohr 2 für Heissluft oder heisse Abgase auf, an das zwölf strahlschattenfreie Strahlflächen anschliessen. Vier der Strahlplatten weisen auch Befestigungsleisten 5 auf, wobei zwei Befestigungsleisten 5 den Halter übergreifen.

In Figur 10 ist erkennbar, dass in das Durchflussrohr 2 als Tauchrohr 21 für heisse Abgase das Flammrohr 21 eines Gebläsebrenners eingeschoben ist. Dem Durchflussrohr 2 ist zusätzlich noch ein Abgasventilator 16 zugeordnet.

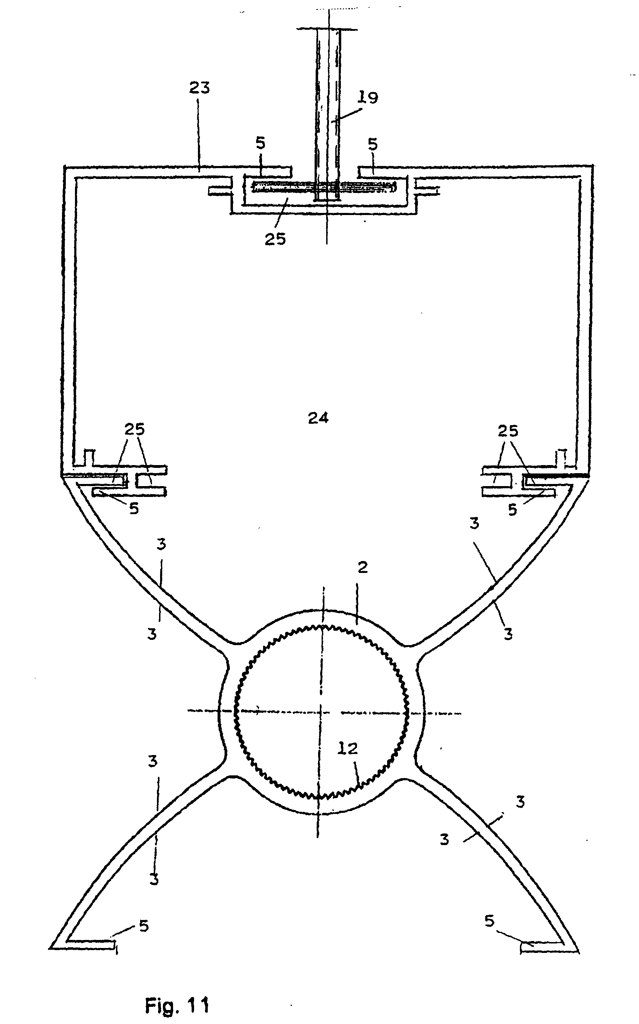

Gemäss Figur 11 bildet ein Deckenradiator entsprechend Figur 4 zusammen mit einem U-förmigen Profil 23 einen Luftkanal 24 aus. Dieser weist eine Befestigungsnut 25 für den Halter 19 auf. Ferner besitzt das U-förmige Profil zwei weitere Befestigungsnuten 25 zur Aufnahme der Befestigungsleisten 5 an den Strahlplatten 3. Diese Befestigungsleisten 5 sind in die Nuten 25 eingeschoben.

Die in den Figuren 1 bis 11 gezeigten Deckenradiatoren haben das gemeinsame Merkmal, dass mit kleinsten Baumassen und geringem Gewicht eine optimale Durchbiegefestigkeit erreicht wird. Zudem wird aufgrund der X-Form die wirkungsvolle Strahlplattenfläche und Wärmestrahlleistung pro Heizrohr zumindest verdoppelt.

## Patentansprüche

1. Deckenradiator für die Beheizung bzw. Kühlung von Räumen aller Art aus zumindest einem Durchflussrohr (2) für ein Heiz- oder Kühlmedium und einem Halter (19, 23),
- wobei das Durchflussrohr (2) mittels des Halters (19, 23) unterhalb einer Raumdecke aufhängbar ist,
- wobei von dem Durchflussrohr (2) zumindest drei bogenartige oder flache Strahlplatten strahlenförmig abstehen,
- wobei die Strahlplatten profilierte oder glatte Oberflächen aufweisen,
- wobei die Strahlplatten mit Befestigungsleisten (5) oder Befestigungsprofilen (20) für den Halter versehen sind,
- und wobei zumindest eine der drei Strahlplatten mittels einer der Befestigungsleisten (5) oder eines der Befestigungsprofile (20) an dem Halter (19, 23) befestigt ist,
**dadurch gekennzeichnet,**
- **dass** die zumindest drei Strahlplatten radial abstehen.

2. Deckenradiator nach Anspruch 1, **dadurch gekennzeichnet, dass** in dem Durchflussrohr (2) ein Tauchrohr (21) angeordnet ist.

3. Deckenradiator nach Anspruch 2, **dadurch gekennzeichnet, dass** das Tauchrohr (21) mit einem Gas- oder Ölbrenner (15) in Verbindung steht.

4. Deckenradiator nach wenigstens einem der Ansprüche 1 bis 3, **dadurch gekennzeichnet, dass** das Durchflussrohr (2) zusammen mit den Strahlplatten (3) im Strangpressverfahren aus Aluminium oder Kunststoff hergestellt ist.

5. Deckenradiator nach wenigstens einem der Ansprüche 1 bis 3, **dadurch gekennzeichnet, dass** das Durchflussrohr (2) mit aus abgewinkelten und gesickten Blechplatten (8) hergestellten Strahlplatten (3) verbunden ist.

6. Deckenradiator nach wenigsten einem der Ansprüche 1 bis 5, **dadurch gekennzeichnet, dass** an zumindest einer Strahlfläche (4) zumindest ein elektrisches Heizband (11) angeordnet ist.

7. Deckenradiator nach wenigstens einem der Ansprüche 1 bis 6, **dadurch gekennzeichnet, dass** das Durchflussrohr (2) innenseitig eine Riffelung (12) aufweist.

8. Deckenradiator nach wenigstens einem der Ansprüche 1 bis 7, **dadurch gekennzeichnet, dass** in das Durchflussrohr (2) Profilstäbe oder Spiralen als Turbulatoren (22) eingelegt sind.

9. Deckenradiator nach wenigstens einem der Ansprüche 1 bis 8, **dadurch gekennzeichnet, dass** zwei Strahlplatten (3) zusammen mit dem Halter (19, 23), welcher ein U-Profil (23) umfasst, einen Luftkanal (24) ausbilden.

## Claims

1. Ceiling radiator for heating or respectively cooling all types of rooms, said radiator comprising at least one throughflow pipe (2) for a heating or cooling medium and a holder (19, 23),
- the throughflow pipe (2) being suspendable below a room ceiling by means of the holder (19, 23),
- at least three arcuate or flat radiating panels protruding in a radiating manner from the throughflow pipe (2),
- the radiating panels having profiled or smooth surfaces,
- the radiating panels being provided with mounting bars (5) or mounting profiles (20) for the holder,
- and at least one of the three radiating panels being secured by means of one of the mounting bars (5) or one of the mounting profiles (20) on the holder (19, 23),
**characterised in that**
- the at least three radiating panels protrude radially.

2. Ceiling radiator according to claim 1, **characterised in that** an immersion pipe (21) is disposed in the throughflow pipe (2).

3. Ceiling radiator according to claim 2, **characterised in that** the immersion pipe (21) communicates with a gas or oil burner (15).

4. Ceiling radiator according to at least one of claims 1 to 3, **characterised in that** the throughflow pipe (2), together with the radiating panels (3), is produced from aluminium or plastics material by an extrusion method.

5. Ceiling radiator according to at least one of claims 1 to 3, **characterised in that** the throughflow pipe (2) is connected to radiating panels (3) produced from bent and corrugated sheet metal panels (8).

6. Ceiling radiator according to at least one of claims 1 to 5, **characterised in that** at least one electrical heating strip (11) is disposed on at least one radiating face (4).

7. Ceiling radiator according to at least one of claims 1 to 6, **characterised in that** the throughflow pipe (2) has a grooving (12) internally.

8. Ceiling radiator according to at least one of claims 1 to 7, **characterised in that** profile bars or spirals are inserted into the throughflow pipe (2) as turbulators (22).

9. Ceiling radiator according to at least one of claims 1 to 8, **characterised in that** two radiating panels (3), together with the holder (19, 23) which has a U-shaped profile (23), form an air duct (24).

## Revendications

1. Radiateur de plafond pour chauffer ou refroidir des volumes de toutes sortes, composé d'un tube de circulation (2) pour un fluide de chauffage ou de refroidissement et d'un support (19, 23), dans lequel :
- le tube de circulation (2) peut être suspendu par le support (19, 23) en dessous d'un plafond,
- du tube de circulation (2) partent en rayons au moins trois plaques radiantes courbées ou planes,
- les plaques radiantes ont des surfaces lisses ou profilées,
- les plaques radiantes sont équipées de baguettes de fixation (5), ou de profilés de fixation (20) pour raccordement au support,
- au moins une des trois plaques radiantes est fixée sur le support (19, 23) par une des baguettes de fixation (5) ou un des profilés de fixation (20),
**caractérisé en ce que**
les plaques radiantes, au nombre de trois au moins, divergent radialement.

2. Radiateur de plafond selon la revendication 1,
**caractérisé en ce que**
dans le tube de circulation (2) est monté un tube plongeur (21).

3. Radiateur de plafond selon la revendication 2,
**caractérisé en ce que**
le tube plongeur (21) est en liaison avec un brûleur à gaz ou à huile (15).

4. Radiateur de plafond selon l'une quelconque des revendications 1 à 3,
**caractérisé en ce que**
le tube de circulation (2) est réalisé d'une seule pièce avec les plaques radiantes (3) par étirage, en aluminium ou en matière plastique.

5. Radiateur de plafond selon l'une quelconque des revendications 1 à 3,
**caractérisé en ce que**
le tube de circulation (2) est relié à des plaques radiantes (3) fabriquées à partir des plaques de tôle (8) coudées ou moulurées.

6. Radiateur de plafond selon l'une quelconque des revendications 1 à 5,
**caractérisé en ce que**
sur au moins une surface radiante (4) est montée au moins une bande électrique chauffante (11).

7. Radiateur de plafond selon l'une quelconque des revendications 1 à 6,
**caractérisé en ce que**
le tube de circulation (2) porte une cannelure interne (12).

8. Radiateur de plafond selon l'une quelconque des revendications 1 à 7,
**caractérisé en ce que**
dans le tube de circulation (2) sont montées des barres profilées ou des spirales en tant qu'éléments créant des turbulences (22).

9. Radiateur de plafond selon l'une quelconque des revendications 1 à 8,
**caractérisé en ce que**
deux plaques radiantes (3) forment, avec le support (19, 23) qui présente un profil en U (23), un canal d'air (24).
